# EUROPÄISCHE PATENTSCHRIFT

(11) **EP 2 416 139 B1**
(45) Veröffentlichungstag und Bekanntmachung des Hinweises auf die Patenterteilung: **09.10.2013**
(21) Anmeldenummer: 11005927.6
(22) Anmeldetag: 20.07.2011
(51) Int. Cl.: G01M 11/06

(54) **Verfahren zur Kalibrierung eines wenigstens einen Scheinwerfer eines Kraftfahrzeuges ansteuernden Fahrzeugsystems**
Method for calibrating a vehicle system managing at least one headlamp on a motor vehicle
Procédé de calibrage d'un système de véhicule commandant au moins un phare de véhicule automobile

(30) Priorität: 04.08.2010 DE 102010033351
(43) Veröffentlichungstag der Anmeldung: 08.02.2012
(73) Patentinhaber: Audi AG, 85045 Ingolstadt (DE); Audi Electronics Venture GmbH, 85080 Gaimersheim (DE)
(72) Erfinder: Taner, Anil, Dr., 85051 Ingolstadt (DE); Totzauer, Alexander, 85080 Gaimersheim (DE); Hummel, Benjamin, 74219 Möckmühl (DE)
(74) Vertreter: Thielmann, Frank

(56) Entgegenhaltungen:
- EP-A1- 1 640 700
- EP-A1- 2 128 590
- FR-A1- 2 764 695
- GB-A- 2 299 163
- US-A- 5 321 439
- US-A1- 2003 107 898
- SEBASTIAN MOJRZISCH ET AL: 'High Dynamic Headlamp System based on a Segmented Shutter' PROCEEDINGS OFTHE 7TH INTERNATIONAL SYMPOSIUM ON AUTOMOTIVE LIGHTING, [Online] 14 September 2009, XP055046295 Gefunden im Internet: <URL:http://media1.mypage.cz/files/media1:4 aae4095c74fe.pdf.upl/P1.2_065_Mojrzisch_Seb astian_L-LAB.pdf> [gefunden am 2012-12-03]

## Beschreibung

Die Erfindung betrifft ein Verfahren zur Kalibrierung eines wenigstens einen Scheinwerfer eines Kraftfahrzeugs ansteuernden Fahrzeugsystems, welcher Scheinwerfer zur segmentweisen Ausleuchtung eines in Segmente unterteilten Ausleuchtbereichs ansteuerbar ist.

Fahrzeugsysteme, die eine Veränderung der Lichtverteilung eines Scheinwerfers in Reaktion auf eine aktuelle Verkehrssituation erreichen, sind grundsätzlich bekannt. Dabei passen derartige Fahrzeugsysteme, insbesondere Lichtassistenzsysteme, die Lichtverteilung immer detaillierter an die Umgebung an und sparen beispielsweise immer kleinere Bereiche um erkannte Verkehrsteilnehmer aus. Während beispielsweise ein sogenanntes Fernlichtassistenzsystem das Fernlicht ganz abschaltet, wenn es einen anderen Verkehrsteilnehmer erkennt, leuchten neuere Fahrzeugsysteme bereits den Bereich zwischen dem erkannten Verkehrsteilnehmer und dem Abblendlicht aus, das bedeutet, das Fernlicht wird erst ab dem erkannten entgegenkommenden Kraftfahrzeug bzw. sonstigem Verkehrsteilnehmer ausgespart. Es wurden auch bereits Fahrzeugsysteme vorgeschlagen, die allein das erkannte entgegenkommende Kraftfahrzeug aussparen, also auch seitlich neben diesem Fahrzeug weiterhin eine fernlichtartige Ausleuchtung ermöglichen.

Durch die stetige Verfeinerung der Ausleuchtung steigt die Anforderung an die Genauigkeit der Scheinwerfer: Je geringer die Aussparung um die erkannten Verkehrsteilnehmer sein soll, umso genauer muss ein Scheinwerfer eingestellt sein bzw. umso genauere Informationen über die Ausleucht- und Aussparbereiche sind notwendig. Dies sei an einem Beispiel näher erläutert. Soll beispielsweise ein Fernlichtassistenzsystem eingesetzt werden, welches ein entgegenkommendes Fahrzeug möglichst exakt aus dem Fernlicht ausnehmen soll, reicht es bereits aus, dass der Scheinwerfer um wenige Zehntel Grad verkippt verbaut wird, um das entgegenkommende Fahrzeug bzw. sonstige Verkehrsteilnehmer dennoch zu blenden. Daraus ergibt sich die Notwendigkeit, möglichst genaue Kalibrierungsinformationen in dem entsprechenden Fahrzeugsystem vorzuhalten, die insbesondere segmentbezogene Informationen über den Ausleuchtbereich eines Segments und dessen Position enthalten sollten. Nur unter Kenntnis von Kalibrierungsinformationen ist es möglich, auch den richtigen Bereich, konkret den des entgegenkommenden Fahrzeugs, auszublenden.

Bislang sind neben der Justage des Abblendlichts allerdings lediglich Systeme bekannt, die mit einer Kalibrierung bezüglich des Ausleuchtbereichs des gesamten Scheinwerfers arbeiten. Dies liegt darin begründet, dass viele aktuelle Fahrzeugsysteme hauptsächlich die korrekte Ausleuchtung in Längsrichtung des Kraftfahrzeugs, bzw., zweidimensional betrachtet, in Vertikalrichtung, betrachten, während bezüglich der Hell-Dunkel-Grenze in Querrichtung, zweidimensional betrachtet also in horizontaler Richtung, die Anforderungen meist eher gering waren.

EP 2 128 590 A1 offenbart ein Verfahren und eine Vorrichtung zur Kalibrierung einer durch einen Frontscheinwerfer eines Fahrzeugs erzeugten horizontalen Hell-Dunkel-Grenze. Durch eine Bildverarbeitung soll eine Position einer durch mindestens einen Frontscheinwerfer erzeugten horizontalen Hell-Dunkel-Grenze als Ist-Position ermittelt werden, sodass unter Berücksichtigung einer Soll-Position ein Korrekturwert gebildet werden kann. Es geht um verschwenkbare Scheinwerfer, bei denen die horizontale Hell-Dunkel-Grenze relativ nah an detektierte relevante Objekte herangeschoben werden soll.

US 2003/107898 A1 betrifft ein Verfahren zum Betrieb eines Richtungskontrollsystems für Frontscheinwerfer, bei denen die Ausstrahlwinkel der Frontscheinwerfer veränderbar sind, mithin der gesamte Ausleuchtbereich verschwenkbar ist. Zur Kalibrierung eines Steuersystems soll zunächst eine ursprüngliche Referenzposition für den Frontscheinwerfer 11 ermittelt werden. Dafür wird ein Kalibrationsmodus aktiviert, in der ein Benutzer manuell eine Verschwenkung nach oben und unten bzw. links und rechts oder beides auslösen kann. Der Frontscheinwerfer wird nun in einer bestimmten Referenzorientierung ausgerichtet und die ursprüngliche Referenzposition wird bestimmt und abgespeichert.

US 5 321 439 betrifft ein System zum Testen eines Frontscheinwerfers. Es wird ein Zielschirm verwendet, der auch Referenzindizien zur Intensität und Positionierung enthält.

EP 1 640 700 A1 betrifft eine weitere Vorrichtung zur Einstellung von Scheinwerfern in Kraftfahrzeugen, worin Hell-Dunkel-Grenze des Scheinwerfers bestimmt wird.

GB 2 299 163 A betrifft ein Verfahren zur Justage einer optischen Achse eines Frontscheinwerfers. Auch dort wird ein Schirm verwendet, wobei die Justage anhand eines Wendepunkts erfolgt.

FR 2 764 695 A1 betrifft ein Verfahren zur Steuerung der Orientierung eines Scheinwerfers, der nur einzige Lichtquelle und einen einzigen Reflektor aufweist. Dort ist ferner die Reflektion eines Laserstrahls an einer Referenzfläche, dort der Glasabdeckung des Scheinwerfers, beschrieben.

Der Artikel "High Dynamic Headlamp System based in a Segmented Shutter" von S. Mojrzisch et al., Proceedings of the 7th International Symposium on Automotive Lighting. 2009, beschreibt Scheinwerfer mit einem LED-Array und DMS-Scheinwerfer, schlägt jedoch selbst die Verwendung einer segmentierten Blende vor, wobei die Segmente der Blende nach oben und unten gefahren werden können, um verschiedene Lichtverteilungen zu erzielen.

Der Erfindung liegt daher die Aufgabe zugrunde, ein Kalibrierungsverfahren anzugeben, welches insbesondere im Bezug auch auf seitlich begrenzte Aussparungsbereiche eines segmentweise ansteuerbaren Scheinwerfers verbesserte Kalibrierungsinformationen liefert.

Zur Lösung dieser Aufgabe ist bei einem Verfahren der eingangs genannten Art erfindungsgemäß vorgesehen, dass wenigstens eine Kalibrierungsmessung für wenigstens ein Segment oder eine nicht alle Segmente umfassende Gruppe bei Ausleuchtung nur des Segments oder der Gruppe vorgenommen wird, wobei aus den Messergebnissen bei der Ansteuerung zu verwendende, auf die Lage des Segments oder der Gruppe von Segmenten bezogene Kalibrierungsinformationen ermittelt werden, wobei nur ein Teil der Segmente vermessen werden, wonach die Kalibrierungsinformationen für nicht vermessene Segmente aus den Kalibrierungsinformationen der vermessenen Segmente ermittelt werden.

Es wird also von einem Scheinwerfer ausgegangen, dessen Ausleuchtbereich in Segmente unterteilt ist, die einzeln ansteuerbar sind. Das bedeutet, der Scheinwerfer weist ansteuerbare Komponenten auf, über die einzelne Segmente des Ausleuchtbereichs zu- oder weggeschaltet werden können. Solche Scheinwerfer sind grundsätzlich bekannt und müssen hier nicht näher dargelegt werden; beispielsweise kann das Zu- oder Abschalten eines Ausleuchtbereichs über ein LED-Array, ansteuerbare Blenden und/oder Reflektoren und dergleichen realisiert werden. Mit einem solchen Scheinwerfer lässt sich beispielsweise eine Funktionalität wie die eingangs bereits diskutierte realisieren, in der bei Fernlicht einzelne Verkehrsteilnehmer aus der gesamten Lichtverteilung ausgespart werden können. Entsprechend kann sich die vorliegende Erfindung mit besonderem Vorteil auf die Kalibrierung einer segmentierten Fernlichtverteilung beziehen.

Die Erfindung schlägt nun vor, die Kalibrierung nicht mehr bezüglich des gesamten Ausleuchtbereichs vorzunehmen, sondern segmentweise oder für Gruppen weniger Segmente vorzugehen. Dabei ist es bevorzugt, einzelne Segmente zu betrachten. Durch Ermitteln der einzelnen Segmente des Ausleuchtbereichs und die Mitteilung der ermittelten Segmente an die Fahrzeugsysteme, die diese Information zur Ansteuerung benötigen, ist es möglich, die Einbau- und Bauteiltoleranzen des Scheinwerfers zu berücksichtigen und auf diese Weise zu erreichen, dass beispielsweise im Fall des Fernlichts andere Verkehrsteilnehmer ohne Blendung derselben verbessert ausgespart werden können. Im Übrigen sei darauf hingewiesen, dass gerade dann, wenn Einbau- und Bauteiltoleranzen des Scheinwerfers bezüglich der horizontalen Richtung - welche beispielsweise beim Aussparen anderer Verkehrsteilnehmer relevant ist - relevant sind und vermessen werden sollen, das vorgeschlagene Vorgehen besonders vorteilhaft ist. Bei Segmenten des Ausleuchtbereichs, die innerhalb des Gesamtausleuchtbereichs liegen, sind Hell-Dunkel-Grenzen in der Horizontalen deutlicher zu erkennen als bei am Rande gelegenen Segmenten. Entsprechend kann beim vorliegenden Verfahren auch dann, wenn nur eine Gesamtkalibrierung bezogen auf den Ausleuchtbereich des Scheinwerfers betrachtet werden soll, es nützlich sein, nur ein zentral gelegenes Segment zu betrachten und daraus auf die Ausrichtung, insbesondere in der Horizontalen, des gesamten Scheinwerfers zu schließen.

Das vorliegende Verfahren eignet sich besonders für eine Initialkalibrierung der Scheinwerfer eines Kraftfahrzeugs, das bedeutet, es werden für mindestens ein Segment des Ausleuchtbereichs eines Scheinwerfers die Position und die Ausdehnung des Segments berechnet, um dies zur Grundlage der Ansteuerung des Scheinwerfers durch ein oder mehrere Fahrzeugsysteme zu machen. Die Kalibrierungsinformationen umfassen also beispielsweise die Position und Ausdehnung der einzelnen Segmente des Ausleuchtbereichs, wobei die Kalibrierungsinformationen in dem den Scheinwerfer ansteuernden Fahrzeugsystem gespeichert werden, um eine möglichst exakte Einstellung der Lichtverteilung des Scheinwerfers während des Betriebs zu ermöglichen.

Es kann in einer nicht zur Erfindung gehörigen Ausgestaltung vorgesehen sein, dass alle Segmente vermessen werden. Das bedeutet, dass beispielsweise alle Segmente des Ausleuchtbereichs nacheinander ausgeleuchtet werden und für jedes dieser Segmente eine Kalibrierungsmessung durchgeführt wird. Denkbar ist es natürlich auch, dass der Ausleuchtbereich so in Gruppen von Segmenten aufgeteilt wird, dass die Gruppen den gesamten Ausleuchtbereich abdecken. Die hier beschriebene Variante, insbesondere das Ausmessen einzelner Segmente, sollte dann eingesetzt werden, wenn davon auszugehen ist, dass die die einzelnen Segmente erzeugenden Komponenten nicht zwangsläufig in fester Beziehung zueinander stehen, sondern dass es vorkommen kann, dass auch hier beispielsweise bauliche Toleranzen auftreten.

Erfindungsgemäß ist jedoch vorgesehen, dass nur ein Teil der Segmente vermessen werden, wonach die Kalibrierungsinformationen für nicht vermessene Segmente aus den Kalibrierungsinformationen der vermessenen Segmente ermittelt werden. Diese Ausgestaltung ist besonders vorteilhaft, wenn eine innerhalb zugelassener Toleranzen feste Beziehung zwischen einzelnen Segmenten oder gar allen Segmenten besteht, so dass, wenn die Lage eines Segments bekannt ist, die Lage der anderen Segmente aufgrund der Kantenarchitektur des Scheinwerfers hieraus berechnet werden kann. Beispielsweise sind Scheinwerfer möglich, in denen vier Reflektoren benutzt werden, die jeweils einer Untermenge der ausleuchtbaren Segmente zugeordnet sind. In einem solchen Fall kann es ausreichend sein, ein Segment für jeden dieser vier Reflektoren zu betrachten, um die Kalibrierungsinformationen für die übrigen Segmente, die den Reflektor nutzen, aus der bekannten festen Beziehung zwischen den Segmenten eines Reflektors zu ermitteln.

In weiterer Ausgestaltung der vorliegenden Erfindung kann vorgesehen sein, dass die Helligkeitsverteilung auf einer insbesondere zur optischen Achse des Scheinwerfers und/oder zur Fahrzeuglängsachse senkrechten, definiert positionierten Fläche vermessen wird. Es wird also, was insbesondere für die Vermessung einer Fernlichtverteilung zweckmäßig ist, eine feste, insbesondere senkrechte Ebene definiert, auf der die Kalibrierung vorgenommen wird. Mit der Kenntnis der Scheinwerfergeometrie ist es vollkommen ausreichend, die Lage des Segments auf der definiert positionierten Flächen zu kennen, um hieraus Position und Ausdehnung des gesamten Segments schlussfolgern zu können.

Um eine solche definierte Messgeometrie zu erzeugen, kann vorgesehen sein, dass zur Kalibrierungsmessung eine Messwand verwendet wird, welche bei ausgeleuchtetem Segment oder ausgeleuchteter Gruppe von einer im Kraftfahrzeug verbauten Kamera, insbesondere einer dem den Scheinwerfer ansteuernden Fahrzeugsystem zugeordneten Kamera, aufgenommen wird. Es wird also eine Messwand beispielsweise in definiertem Abstand vor dem Scheinwerfer/Kraftfahrzeug positioniert. Die entstehende Lichtverteilung durch das Segment auf der Messwand kann nun durch eine Kamera gemessen werden, wobei mit besonderem Vorteil eine bereits im Fahrzeug verbaute Kamera, die dem Fahrzeugsystem zugeordnet ist, verwendet wird. Es wird also beispielsweise eine Kamera verwendet, die ohnehin für eine den Scheinwerfer ansteuernde Lichtassistenz-Funktion als Sensor vorgesehen ist, so dass sich unter anderem ein deutlicher Kostenvorteil ergibt, da keine zusätzliche Kamera benötigt wird. Ein weiterer sehr wichtiger Vorteil dieser Anordnung ist, dass die einzelnen Segmente des Ausleuchtbereichs vom Funktionssensor, also der im Kraftfahrzeug verbauten Kamera, selbst erkannt werden, so dass auf diese Weise eine Fehlkalibrierung der Kamera vernachlässigt werden kann: Dadurch, dass die Segmente direkt von der Kamera im Kraftfahrzeug aufgezeichnet werden, werden sie bezüglich der aktuellen Lage und Kalibrierung der Kamera ermittelt und eine Fehljustage und Fehlkalibrierung der Kamera wirkt sich auf die letztlich durchzuführende Funktion und die Ansteuerung der Scheinwerfer nicht aus. Ein weiterer Vorteil der Nutzung einer bereits im Kraftfahrzeug verbauten Kamera ist, dass eine Übermittlung der Kalibrierungsinformationen, beispielsweise Position, Ausdehnung und Helligkeit der Segmente, nicht mehr notwendig ist und die Übertragungszeit während der Montage bzw. während des Service in der Werkstatt entfällt. In diesem Zusammenhang ist es von besonderem Vorteil, wenn der Kalibrierungsvorgang durch ein dem Fahrzeugsystem zugeordnetes Steuergerät gesteuert wird und/oder die ermittelten Kalibrierungsinformation in dem Steuergerät segmentbezogen gespeichert werden. Letztlich muss dann lediglich noch die Messwand vor dem Kraftfahrzeug definiert positioniert werden, woraufhin der Kalibrierungsvorgang im Steuergerät gestartet und insbesondere vollautomatisch durchgeführt wird. Nach dem Vorgang liegen die Kalibrierungsinformationen zur Ansteuerung des Scheinwerfers vor und die Messwand kann wieder entfernt werden.

Zweckmäßigerweise kann vorgesehen sein, dass ein Ausleuchtbereich des Segments in der Wandebene in einem Schwellwertverfahren bestimmt wird. Es wird also letztlich das Bild des Segments auf der Messwand durch die Kamera aufgezeichnet und durch geeignete Bildverarbeitungsalgorithmen, insbesondere eine Bereichsextraktion durch Helligkeits- und/oder Farbschwellen, wird der ausgeleuchtete Bereich ermittelt und wiederum zur Verwendung der Kalibrierungsinformationen genutzt. Solche Schwellwertverfahren sind beispielsweise aus dem Bereich der Ermittlung von Hell-Dunkel-Grenzen bekannt. In einer vorteilhaften Weiterbildung des erfindungsgemäßen Verfahrens kann dabei vorgesehen sein, dass eine Messwand mit wenigstens einer Referenzlichtquelle verwendet wird, insbesondere wenigstens einer, bevorzugt zwei, in ihrem Spektrum dem Spektrum des Scheinwerfers entsprechenden Lichtquelle. Gerade bei Schwellwertverfahren, insbesondere aber auch, wenn als ein Teil der Kalibrierungsinformationen eine Helligkeitsinformation bestimmt werden soll, können sich Störlichteffekte, im Falle einer Messwand beispielsweise durch Umgebungslicht hervorgerufen, auf die Genauigkeit der Ermittlung des Ausleuchtbereichs des Segments in der Wandebene auswirken. Mithin ist vorgesehen, Referenzlichtquellen zu verwenden, insbesondere wenigstens eine Referenzlichtquelle, die in ihrem Spektrum dem Spektrum des Scheinwerfers entspricht. Dies kann beispielsweise derselbe Lichtquellentyp sein, beispielsweise eine Halogen-Lichtquelle bei einem Halogen-Scheinwerfer, eine LED-Lichtquelle bei einem LED-Scheinwerfer und eine Glühlampen-Lichtquelle bei einem Glühlampen-Scheinwerfer. Es kann insbesondere auch eine universell einsetzbare Messwand verwendet werden, die eine LED-Referenzlichtquelle, eine Halogen-Referenzlichtquelle, eine Xenon-Lichtquelle und eine Glühlampen-Referenzlichtquelle umfasst. Bei einer bestimmten Kalibrierungsmessung wird dann immer die wenigstens eine, dem Scheinwerfer entsprechende Lichtquelle aktiviert. Diese Nutzung von im Spektrum dem Scheinwerfer entsprechenden Lichtquellen berücksichtigt auch die Einflüsse des Spektrums der Lichtquelle und der Kamera. So kann durch die Helligkeit der Referenzpunkte auf der Messwand üblicherweise nicht direkt auf die Helligkeit des Scheinwerfers geschlossen werden, weil beispielsweise eine Helligkeitsreferenz auf Basis einer LED-Lichtquelle im Kamerabild deutlich heller erscheinen kann als die Helligkeitsreferenz einer Halogen-Lichtquelle, da die Kamera beispielsweise im roten Spektrum (Halogen) weniger empfindlich ist als im blauen Spektrum (LED). Diese Effekte können durch spezielle Lichtquellen reduziert werden.

Es sei an dieser Stelle angemerkt, dass es von besonderem Vorteil ist, wenn die Referenzlichtquellen exakt den Helligkeitswert besitzen, der den Rand eines Segments beschreibt. Auf diese Weise wird es ermöglicht, für die Messung eine Kamera zu verwenden, welche die Helligkeit nur bedingt genau quantitativ erfassen können muss. Durch Referenzlichtquellen, die exakt so hell leuchten, wie es am Rand eines Segments der Fall ist (die letztlich also einem Schwellwert für die Helligkeit entsprechen), ist es vollkommen ausreichend, einen Vergleich der Pixel des Segmentrandes und der Pixel, die von der Referenzlichtquelle beleuchtet werden, vorzunehmen.

Alternativ oder zusätzlich zur Ermittlung des von dem Segment in der Wandebene ausgeleuchteten Bereichs durch Bildverarbeitungsalgorithmen kann auch vorgesehen sein, dass ein charakteristischer Punkt des Segments oder der Gruppe in der Wandebene bestimmt wird, insbesondere ein Mittelpunkt, woraus die Form und die Größe des Segments oder der Gruppe abgeleitet wird. Häufig ist es so, dass die Bestimmung des Mittelpunkts eines Segments genauer ist als die Ermittlung der Ränder eines Lichtflecks, wie er auf der Wand abgebildet wird. Die Ausdehnung des Segments kann dann, wenn die Toleranzen vernachlässigbar sind, berechnet werden. Allerdings ist in dieser Ausgestaltung, wenn allein ein Mittelpunkt in der Wandebene bestimmt wird, beispielsweise ein trapezförmiger Verzug der Segmente nicht erkennbar.

In einer alternativ zur Messwand nutzbaren Variante des erfindungsgemäßen Verfahrens kann vorteilhaft vorgesehen sein, dass das Licht des Scheinwerfers durch einen vor dem Scheinwerfer definiert positionierten Lichtsammelkasten aufgefangen und auf eine Projektionsfläche geleitet wird. Ein solcher Lichtsammelkasten, der insbesondere unmittelbar vor dem Scheinwerfer angeordnet werden kann, hat den Vorteil, dass eine im Lichtkasten vorgesehene Kamera weniger Einflüssen der Umgebungsbedingungen ausgesetzt ist und die Lagebestimmung des Segments robuster erfolgen kann. Weiterhin führt die Integration der Kamera in einen Lichtsammelkasten zu konstanten Beleuchtungsbedingungen, so dass keine Referenzhelligkeitslichtquellen notwendig sind und diese entfallen können. Konkret kann vorgesehen sein, dass die Projektionsfläche eine Messfläche einer Kamera ist oder eine Kamera die Projektionsfläche aufnimmt, wobei die letztgenannte Ausgestaltung bevorzugt wird, da sich hierbei besser auswertbare Bilder ergeben. Zweckmäßigerweise kann das Licht im Lichtsammelkasten wenigstens einmal, insbesondere zur Lichtwegverlängerung, reflektiert werden. Zusätzlich oder alternativ kann eine Skalierung des Lichtbilds des Segments, wie es vom Scheinwerfer ausgestrahlt wird, vorgenommen werden. So kann beispielsweise vorgesehen sein, dass ein gefalteter Lichtsammelkasten verwendet wird, in dem das Lichtbild mehrmals reflektiert und dabei beispielsweise kleiner oder größer skaliert wird, woraufhin es schließlich auf eine im Sammelkasten liegende Zwischenebene, die Projektionsebene, projiziert wird, wo es mit Hilfe der Kamera aufgenommen werden kann.

Wie bereits erwähnt, wird durch die konstanten Umgebungsbedingungen im Lichtsammelkasten die Kalibrierung robuster. Weiterhin können (müssen aber nicht) die Referenzlichtquellen entfallen: Die Kamera muss einmal für die im Lichtsammelkasten herrschenden Umgebungsbedingungen kalibriert werden, so dass Pixelwerte der Kamera auf Helligkeitswerte für bestimmte Lichtquellen abgebildet werden können. Mit den Vorteilen der konstanten Umgebungsbeleuchtung und dadurch dem Entfall der Referenzlichtquellen sowie zusätzlich durch die durch die Faltung des Lichts kleinere Bauweise ergeben sich Vorteile bei der Verwendung des Kalibrierungsverfahrens in Produktions- und Werkstätten. In beiden hier dargestellten Fällen - Verwendung der Projektionswand und Verwendung des Lichtsammelkastens - wird nur eine einzige Kamera verwendet.

Auch im Fall des Lichtsammelkastens kann selbstverständlich wiederum eine Auswertung dadurch erfolgen, dass ein Ausleuchtbereich des Segments in der Projektionsebene in einem Schwellwertverfahren bestimmt wird. Denkbar ist es zusätzlich oder alternativ, dass Mittelpunkte von einem oder mehreren Segmenten ermittelt werden. Zu beachten ist besonders in diesem Fall, in dem keine im Kraftfahrzeug verbaute Kamera verwendet wird, dass die von der externen Kamera ermittelten Kalibrierungsinformationen in das Koordinatensystem des Scheinwerfers bzw. des Fahrzeugsystems überführt werden müssen. Dies ist aufgrund der bekannten Geometrie, die ja klar definiert eingestellt wird, jedoch problemlos möglich.

In einer gänzlich anderen Variante eines Kalibrierungsverfahrens, bei der nicht das Lichtbild in einer bestimmten Ebene betrachtet wird, kann vorgesehen sein, dass ein definiert positionierter Laser eine insbesondere speziell für diesen Zweck vorgesehene, wenigstens einem Segment zugeordnete spiegelnde Fläche an einer Komponente einer Optik des Scheinwerfers bestrahlt, wobei die Reflexion des Laserstrahls vermessen wird. Es wird demnach als ein alternatives Kalibrierungsverfahren vorgeschlagen, eine Spiegelfläche beispielsweise auf der Fernlichtoptik des Scheinwerfers vorzusehen und diese mit einem positionierten Laser zu beleuchten. Die Reflexion des Laserstrahls gibt Aufschluss über die Lage der Spiegeloptik und mithin über die Lage der über sie gebildeten Segmente des Ausleuchtbereichs. Beispielsweise kann auch hier ein Scheinwerfer betrachtet werden, dessen Ausleuchtbereich in zwanzig Segmente unterteilbar ist, von denen jeweils fünf Segmenten ein eigener Reflektor zugeordnet ist, so dass immer diese fünf Segmente eine Gruppe bilden, deren Kalibrierungsinformationen über die Vermessung einer an dem zugeordneten Reflektor, insbesondere zusätzlich, vorgesehene Spiegelfläche erfolgt. Es sei jedoch an dieser Stelle hervorgehoben, dass dieses Kalibrierungsverfahren auch besonders vorteilhaft unabhängig von einer segment- bzw. segmentgruppenweisen Kalibrierungsmessung nutzbringend einsetzbar ist, beispielsweise, wenn eine für alle Segmente genutzte Optik verwendet wird.

In dieser dritten Variante des erfindungsgemäßen Verfahrens kann auch vorgesehen sein, dass der Messort des reflektierten Laserstrahls mit einem Referenzort verglichen und durch Vergleich ein Offset als Kalibrierungsinformation ermittelt wird. Die Abweichung der Position der Reflexion zu einem Referenzwert ergibt also letztlich einen Offset der Segmente zu ihrer Solllage. Dieser muss im Fahrzeugsystem gespeichert und auf die Solllagen addiert werden.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Vermessungsanordnung bei einer ersten Ausführungsform des erfindungsgemäßen Verfahrens,
- Fig. 2: eine Vermessungsanordnung bei einer zweiten Ausführungsform des erfindungsgemäßen Verfahrens, und
- Fig. 3: eine Vermessungsanordnung bei einer dritten Ausführungsform des erfindungsgemäßen Verfahrens.

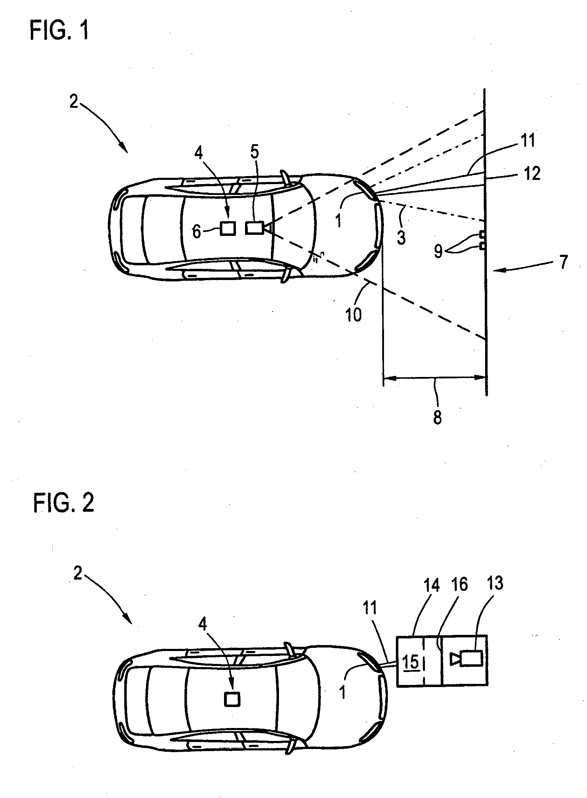

Fig. 1 zeigt eine Illustration zu einer ersten Ausführungsform (erste Variante) des erfindungsgemäßen Verfahrens. Ziel des erfindungsgemäßen Verfahrens ist es, Kalibrierungsinformationen bezüglich eines Scheinwerfers 1 eines Kraftfahrzeugs 2 zu erhalten. Der Scheinwerfer 1 weist dabei einen in mehrere Segmente unterteilten Ausleuchtbereich, angedeutet bei 3, auf, wobei der Scheinwerfer so angesteuert werden kann, dass die verschiedenen Segmente einzeln zu- oder abgeschaltet werden können. Diese Funktionalität wird von einem Fahrzeugsystem 4, hier einem Lichtassistenzsystem, des Kraftfahrzeugs 2 genutzt. Beispielsweise kann das Fahrzeugsystem 4 ausgebildet sein, die Daten einer ihm zugeordneten Kamera 5 auszuwerten und andere Verkehrsteilnehmer, insbesondere entgegenkommende Fahrzeuge, wahrzunehmen. Dann kann insbesondere beim Fernlicht die Fernlichtverteilung, also der Ausleuchtbereich, so gesteuert werden, dass das entgegenkommende Kraftfahrzeug aus dem verbleibenden Ausleuchtbereich ausgespart wird, mithin der Fahrer des entgegenkommenden Fahrzeugs bzw. ein sonstiger Verkehrsteilnehmer nicht geblendet wird. Dafür ist es notwendig, die Lage der einzelnen Segmente des Ausleuchtbereichs 3 genau im Koordinatensystem des Fahrzeugsystems 4 zu kennen, damit nicht, beispielsweise aufgrund von Einbautoleranzen oder dergleichen, dennoch eine Blendung auftritt.

Hierzu kann nun das erfindungsgemäße Verfahren verwendet werden, wobei das Steuergerät 6 des Fahrzeugsystems 4 in dieser ersten Ausführungsform des erfindungsgemäßen Verfahrens ausgebildet ist, das Kalibrierungsverfahren durch entsprechende Ansteuerung verschiedener Komponenten nach Initiierung durch einen Bediener selbst durchzuführen.

Zunächst wird nun in einem definierten Abstand senkrecht zur Längsachse des Kraftfahrzeugs 1 vor das Kraftfahrzeug eine Messwand 7 positioniert, beispielsweise im Abstand 8 von genau 1,5 m. Dabei wird eine Messwand 7 verwendet, die jeweils zwei Referenzlichtquellen 9 eines bestimmten Typs umfasst, die hier übereinander angeordnet sind, so dass nur zwei der Referenzlichtquellen 9 in Fig. 1 zu sehen sind. Als Referenzlichtquelle 9 sind dabei zwei LED-Lichtquellen, zwei Halogen-Lichtquellen und zwei Xenon-Lichtquellen vorgesehen. Zur Kalibrierung wird nun dasjenige Paar von Referenzlichtquellen aktiviert, das dem Typ des Scheinwerfers 1 entspricht.

Wie aus Fig. 1 ferner ersichtlich ist, erfasst die im Kraftfahrzeug verbaute, dem Fahrzeugsystem 4 zugeordnete Kamera 5 in ihrem Erfassungsbereich 10 die Messwand 7 mit den Referenzlichtquellen 9.

Nun wird aufeinanderfolgend der Scheinwerfer 1 so angesteuert, dass seine Segmente einzeln aktiviert werden, also nur das aktivierte Segment 11 auf die Messwand 7 strahlt. Der Lichtkegel eines solchen Segments 11 ist beispielhaft in Fig. 1 gezeigt. Ersichtlich ergibt sich durch die Aktivierung des Segments 11 auf der Messwand 7 ein ausgeleuchteter Bereich 12 des Segments 11 auf der Messwand 7, der nun gemeinsam mit den aktivierten Referenzlichtquellen 9 durch die im Kraftfahrzeug verbaute Kamera 5 aufgenommen wird. Im Steuergerät 6 erfolgt nun eine Auswertung der bezüglich des Segments 11 aufgenommenen Bilddaten der Kamera 5, indem ein Schwellwertverfahren verwendet wird, um den ausgeleuchteten Bereich 12 in der Wandebene zu ermitteln. Ist der ausgeleuchtete Bereich 12 erst bekannt, so kann das gesamte Segment 11 in seiner Position und Ausdehnung aufgrund der bekannten Geometrie des Scheinwerfers 1 ermittelt und als Kalibrierungsinformationen sogleich in dem Steuergerät 6 gespeichert werden. Der Schwellwert wird dabei unter Berücksichtigung der Referenzlichtquellen 9, die Licht von zwei verschiedenen, bestimmten Helligkeiten ausstrahlen, bestimmt, so dass auch der Einfluss von Umgebungslicht und dergleichen weitgehend ausgeschlossen werden kann. Da die Referenzlichtquellen 9 in ihrem Spektrum dem Scheinwerfer 1 entsprechen, werden auch spektrumsbezogene Effekte vermieden, so dass der ausgeleuchtete Bereich 12 und mithin das Segment 11 in seiner Lage genau bestimmt werden kann.

Dieser Vorgang wird in einer nicht erfindungsgemäßen Ausgestaltung für jedes Segment 11 des Ausleuchtbereichs 3 wiederholt, jedoch sieht die Erfindung vor, dass, da von einer festen Beziehung der verschiedenen Segmente untereinander ausgegangen werden kann, es ausreichend ist, wenige Segmente zu vermessen, um dann die Kalibrierungsinformationen der übrigen Segmente aufgrund der bekannten festen Beziehung zu ermitteln. Weiterhin sei angemerkt, dass als weitere Kalibrierungsinformationen auch die Helligkeit der Segmente betrachtet werden kann. Schließlich sei darauf hingewiesen, dass auch eine Berechnung des Mittelpunkts des ausgeleuchteten Bereichs 12 sinnvoll sein kann.

Fig. 2 illustriert eine zweite Variante des erfindungsgemäßen Verfahrens, die nicht mit einer im Kraftfahrzeug 2 verbauten Kamera 5 arbeitet, sondern eine externe Kamera 13 in einem Lichtsammelkasten 14 verwendet. Im Lichtsammelkasten 14, der insbesondere unmittelbar oder möglichst nahe an dem Scheinwerfer 1 angeordnet wird, wird das Lichtbild des Segments 11 im Rahmen der Kalibrierungsmessung durch eine hier nicht näher gezeigte Optik 15 zur Verlängerung des Lichtweges reflektiert und gegebenenfalls skaliert, bis es auf eine Projektionsfläche 16 geleitet wurde, wo es von einer dahinter angeordneten externen Kamera 13 aufgenommen und letztlich wie oben beschrieben ausgewertet wird. In diesem Fall sind keine Referenzlichtquellen erforderlich, da innerhalb des Lichtsammelkastens 14 immer gleiche Umgebungsbedingungen, insbesondere Lichtbedingungen vorliegen, und es daher ausreichend ist, die externe Kamera 13 einmalig korrekt zu kalibrieren. Im vorliegenden Fall müssen die erhaltenen Kalibrierungsinformationen allerdings noch in das Koordinatensystem des Fahrzeugsystems 4, welches den Scheinwerfer 1 ansteuert, übertragen werden, was aber aufgrund der definierten Geometrie problemlos möglich ist.

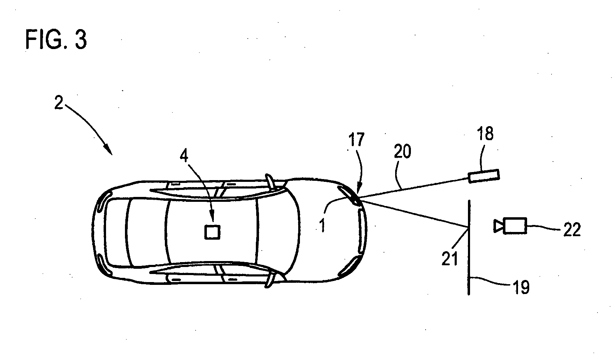

Bei der in Fig. 3 dargestellten dritten Variante des erfindungsgemäßen Verfahrens ist eine spezielle Spiegelfläche 17 an einer Komponente der Optik des Scheinwerfers 1, hier an einem Reflektor, vorgesehen. In einer definierten Position zum Scheinwerfer 1 werden nun ein Laser 18 und eine Messwand 19 angeordnet. Der Laserstrahl 20 des Lasers 18 wird von der Spiegelfläche 17 reflektiert und erzeugt einen Messpunkt 21 auf der Messwand 19. Während in einer ersten Ausgestaltung auf der Messwand 21 eine Skala oder dergleichen vorgesehen sein kann, auf der ein Werker einen Offset von einem Sollauftreffpunkt abliest und entsprechend als Kalibrierungsinformation im Fahrzeugsystem 4 hinterlegt, ist es in einer zweiten Ausgestaltung auch denkbar, eine externe Kamera 22 zu verwenden, die ein Bild der Messwand 19 aufnimmt und die Verschiebung des Messorts 21 vom Referenzort, also den Offset, automatisch bestimmt. Dabei wird hier ein Scheinwerfer 1 verwendet, der vier jeweils unterschiedlichen Segmenten zugeordnete Reflektoren umfasst, wobei an jedem dieser Reflektoren eine Spiegelfläche 17 vorgesehen ist, die einzeln vermessen wird und letztlich den Offset für die ihnen jeweils zugeordneten Segmente bestimmt.

## Patentansprüche

1. Verfahren zur Kalibrierung eines wenigstens einen Scheinwerfer eines Kraftfahrzeugs ansteuernden Fahrzeugsystems, welcher Scheinwerfer zur segmentweisen Ausleuchtung eines in Segmente unterteilten Ausleuchtbereichs ansteuerbar ist,
**dadurch gekennzeichnet,**
**dass** wenigstens eine Kalibrierungsmessung für wenigstens ein Segment oder eine nicht alle Segmente umfassende Gruppe bei Ausleuchtung nur des Segments oder der Gruppe vorgenommen wird, wobei aus den Messergebnissen bei der Ansteuerung zu verwendende, auf die Lage des Segments oder der Gruppe von Segmenten bezogene Kalibrierungsinformationen ermittelt werden, wobei nur ein Teil der Segmente vermessen werden, wonach die Kalibrierungsinformationen für nicht vermessene Segmente aus den Kalibrierungsinformationen der vermessenen Segmente ermittelt werden.

2. Verfahren nach Anspruch 1,
**dadurch gekennzeichnet,**
**dass** die Helligkeitsverteilung auf einer insbesondere zur optischen Achse des Scheinwerfers und/oder der Fahrzeuglängsachse des Kraftfahrzeugs senkrechten, definiert positionierten Fläche vermessen wird.

3. Verfahren nach Anspruch 2,
**dadurch gekennzeichnet,**
**dass** zur Kalibrierungsmessung eine Messwand verwendet wird, welche bei ausgeleuchtetem Segment oder ausgeleuchteter Gruppe von einer im Kraftfahrzeug verbauten Kamera, insbesondere einer dem den Scheinwerfer ansteuernden Fahrzeugsystem zugeordneten Kamera, aufgenommen wird.

4. Verfahren nach Anspruch 3,
**dadurch gekennzeichnet,**
**dass** ein Ausleuchtbereich des Segments in der Wandebene in einem Schwellwertverfahren bestimmt wird.

5. Verfahren nach Anspruch 4,
**dadurch gekennzeichnet,**
**dass** eine Messwand mit wenigstens einer Referenzlichtquelle verwendet wird, insbesondere wenigstens einer, bevorzugt zwei, in ihrem Spektrum dem Spektrum des Scheinwerfers entsprechenden Lichtquelle.

6. Verfahren nach Anspruch 5,
**dadurch gekennzeichnet,**
**dass** die Helligkeit der Referenzlichtquelle der Helligkeit des zu bestimmenden Segmentrandes entspricht.

7. Verfahren nach einem der Ansprüche 3 bis 6,
**dadurch gekennzeichnet,**
**dass** der Kalibrierungsvorgang durch ein dem Fahrzeugsystem zugeordnetes Steuergerät gesteuert wird und/oder die ermittelten Kalibrierungsinformationen in dem Steuergerät segmentbezogen gespeichert werden.

8. Verfahren nach einem der Ansprüche 3 bis 6,
**dadurch gekennzeichnet,**
**dass** ein charakteristischer Punkt des Segments oder der Gruppe bestimmt wird.

9. Verfahren nach Anspruch 2,
**dadurch gekennzeichnet,**
**dass** das Licht des Scheinwerfers durch einen vor dem Scheinwerfer definiert positionierten Lichtsammelkasten aufgefangen und auf eine Projektionsfläche geleitet wird.

10. Verfahren nach Anspruch 9,
**dadurch gekennzeichnet,**
**dass** die Projektionsfläche eine Messfläche einer Kamera ist oder eine Kamera die Projektionsfläche aufnimmt.

11. Verfahren nach Anspruch 9 oder 10,
**dadurch gekennzeichnet,**
**dass** das Licht im Lichtsammelkasten wenigstens ein mal, insbesondere zur Lichtwegverlängerung, reflektiert und/oder das Lichtbild skaliert wird.

12. Verfahren nach Anspruch 1,
**dadurch gekennzeichnet,**
**dass** ein definiert positionierter Laser eine insbesondere speziell für diesen Zweck vorgesehene, wenigstens einem Segment zugeordnete spiegelnde Fläche an einer Komponente einer Optik des Scheinwerfers bestrahlt, wobei die Reflektion des Laserstrahls vermessen wird.

13. Verfahren nach Anspruch 12;
**dadurch gekennzeichnet,**
**dass** der Messort des reflektierten Laserstrahls mit einem Referenzort verglichen und durch Vergleich ein Offset als Kalibrierungsinformation ermittelt wird.

## Claims

1. Method for calibrating a vehicle system controlling at least one headlamp on a motor vehicle, this headlamp being controllable for segmental illumination of an illumination area divided into segments,
**characterised in that**
at least one calibrating measurement is carried out for at least one segment or for a group that does not encompass all the segments, while illuminating only the segment or the group, in the course of which calibration data relating to the position of the segment or of the group of segments, for use during the control, are obtained from the measurement data, only a proportion of the segments being measured, after which the calibration data for segments that have not been measured are obtained from the calibration data of the segments that have been measured.

2. Method according to claim 1, **characterised in that** the brightness distribution is measured over a surface in a defined position, perpendicular in particular to the optical axis of the headlamp and/or to the longitudinal axis of the motor vehicle.

3. Method according to claim 2, **characterised in that** for the calibrating measurement a measuring wall is used which is recorded by an on-board camera in the motor vehicle, particularly a camera associated with the vehicle system that controls the headlamp, when the segment or group is illuminated.

4. Method according to claim 3, **characterised in that** an illumination area of the segment in the plane of the wall is determined in a thresholding process.

5. Method according to claim 4, **characterised in that** a measuring wall is used with at least one reference light source, particularly at least one, preferably two, light sources that correspond in their spectrum to the spectrum of the headlamp.

6. Method according to claim 5, **characterised in that** the brightness of the reference light source corresponds to the brightness of the edge of the segment that is to be measured.

7. Method according to one of claims 3 to 6, **characterised in that** the calibration process is controlled by a control device associated with the vehicle system and/or the calibration data obtained are stored by segment in the control device.

8. Method according to one of claims 3 to 6, **characterised in that** a characteristic point of the segment or group is determined.

9. Method according to claim 2, **characterised in that** the light of the headlamp is captured by a light collecting box in a defined position in front of the headlamp and is directed onto a projection surface.

10. Method according to claim 9, **characterised in that** the projection surface is a measuring surface of a camera, or a camera records the projection surface.

11. Method according to claim 9 or 10, **characterised in that** the light in the light collecting box is reflected at least once, in particular in order to extend the optical path, and/or the photographic image is scaled.

12. Method according to claim 1, **characterised in that** a laser in a defined position irradiates a reflective surface provided, in particular, especially for this purpose on a component of an optical device of the headlamp associated with at least one segment, the reflection of the laser beam being measured.

13. Method according to claim 12, **characterised in that** the measuring point of the reflected laser beam is compared with a reference point and an offset is detected as calibration data by comparison.

## Revendications

1. Procédé de calibrage d'un système de véhicule pilotant au moins un phare d'un véhicule automobile, ledit phare pouvant être piloté pour éclairer segment par segment une zone d'éclairage segmentée,
**caractérisé en ce qu'**au moins une mesure de calibrage est effectuée pour au moins un segment ou un groupe ne comprenant pas tous les segments quand seul le segment ou seul le groupe est éclairé, dans lequel à partir des résultats mesurés des informations de calibrage concernant la position du segment ou du groupe de segments et à utiliser lors du pilotage sont déterminées, dans lequel seule une partie des segments est mesurée, après quoi les informations de calibrage pour des segments non mesurés sont déterminées à partir des informations de calibrage des segments mesurés.

2. Procédé selon la revendication 1, **caractérisé en ce que** le réglage de la luminosité est mesuré sur une surface de position définie, en particulier perpendiculaire à l'axe optique du phare et/ou à l'axe longitudinal de véhicule du véhicule automobile.

3. Procédé selon la revendication 2, **caractérisé en ce qu'**un mur de mesure est utilisé pour la mesure de calibrage qui est enregistré, lorsque le segment est éclairé ou le groupe est éclairé, par une caméra installée sur le véhicule automobile, en particulier par une caméra attribuée au système de véhicule pilotant le phare.

4. Procédé selon la revendication 3, **caractérisé en ce qu'**une zone d'éclairage du segment est déterminée dans le plan de mur dans un procédé de seuillage.

5. Procédé selon la revendication 4, **caractérisé en ce qu'**un mur de mesure avec au moins une source de lumière de référence est utilisé, en particulier avec au moins une, de préférence deux, source(s) de lumière dont le spectre correspond au spectre du phare.

6. Procédé selon la revendication 5, **caractérisé en ce que** la luminosité de la source de lumière de référence correspond à la luminosité du bord de segment à déterminer.

7. Procédé selon l'une quelconque des revendications 3 à 6, **caractérisé en ce que** l'opération de calibrage est commandée par un contrôleur attribué au système de véhicule et/ou les informations de calibrage déterminées sont stockées dans le contrôleur par segment.

8. Procédé selon l'une quelconque des revendications 3 à 6, **caractérisé en ce qu'**un point caractéristique du segment ou du groupe est déterminé.

9. Procédé selon la revendication 2, **caractérisé en ce que** la lumière du phare est captée par un caisson collecteur de lumière de position définie devant le phare et est guidée vers une surface de projection.

10. Procédé selon la revendication 9, **caractérisé en ce que** la surface de projection est une surface de mesure d'une caméra ou **en ce qu'**une caméra enregistre la surface de projection.

11. Procédé selon la revendication 9 ou 10, **caractérisé en ce que** dans le caisson collecteur de lumière, la lumière est réfléchie au moins une fois, en particulier pour prolonger le chemin optique, et/ou l'image de lumière est cadrée.

12. Procédé selon la revendication 1, **caractérisé en ce qu'**un laser de position définie irradie une surface réfléchissante prévue en particulier spécialement à cet effet et attribuée à au moins un segment au niveau d'un composant d'un système optique du phare pendant que la réflexion du rayon laser est mesurée.

13. Procédé selon la revendication 12, **caractérisé en ce que** le point de mesure du rayon laser réfléchi est comparé à un point de référence et un décalage sous forme d'informations de calibrage est déterminé par comparaison.
